Europäisches Patentamt

European Patent Office

Office européen des brevets

(11) Veröffentlichungsnummer: **0 456 115 A2**

## (12) EUROPÄISCHE PATENTANMELDUNG

(21) Anmeldenummer: **91107118.1**

(22) Anmeldetag: **02.05.91**

(51) Int. Cl.⁵: **H04L 9/12**

(30) Priorität: **09.05.90 DE 4014855**

(43) Veröffentlichungstag der Anmeldung:
**13.11.91 Patentblatt 91/46**

(84) Benannte Vertragsstaaten:
**DE FR GB IT NL**

(71) Anmelder: **SIEMENS AKTIENGESELLSCHAFT**
**Wittelsbacherplatz 2**
**W-8000 München 2(DE)**

(72) Erfinder: **Müller, Horst**
**Alsfelder Strasse 2**
**W-6430 Bad Hersfeld ASB 11(DE)**

(54) **Anordnung zur Vermeidung von Schlüsselphasenverlust in Datenübertragungsnetzen mit Halbduplex-Betrieb.**

(57) Anordnung zum verschlüsselten Nachrichtenaustausch im Halbduplex-Betrieb zwischen mehreren Datenstationen (DEE1, DEE2) über eine Übertragungsstrecke (L), wobei jeder Datenstation ein Schlüsselgerät (SG1, SG2) mit einem Sende-Kryptogenerator (KG-S1, KG-S2) in einem Sendekanal und einem Empfangs-Kryptogenerator (KG-E1, KG-E2) in einem Empfangskanal zugeordnet ist und Sende- und Empfangskanal als gemeinsamer Übertragungskanal über die Übertragungsstrecke geführt sein

können. Jedes Schlüsselgerät (SG1, SG2) einer Datenstation (DEE1, DEE2) enthält eine Schaltungsanordnung, um eine Phasengleichheit des Sende-Kryptogenerators (KG-S1) der sendeseitigen Datenstation (DEE1) mit dem Empfangs-Kryptogenerator (KG-E2) der empfangsseitigen Datenstation (DEE2) sicherzustellen. Hierzu werden beim Verschlüsseln bzw. Entschlüsseln die entsprechenden Takte bei den Kryptogeneratoren im Schlüsselgerät zugeführt und damit Schlüsselphasenverlust verhindert.

EP 0 456 115 A2

In gesicherten Datenübertragungsnetzen, wie z.B. in gesicherten Fernschreibnetzen, ist jeder Datenstation des Netzes ein Schlüsselgerät zugeordnet. Das Schlüsselgerät enthält in einem Sendekanal einen Sende-Kryptogenerator und in einem Empfangskanal einen Empfangs-Kryptogenerator zum Verschlüsseln bzw. Entschlüsseln der gesendeten bzw. empfangenen Zeichen. Während der Übertragung ist der Empfangs-Kryptogenerator der empfangenen Datenstation mit dem Sende-Kryptogenerator der sendenden Datenstation gekoppelt. Beim Betrieb eines derartigen Netzes in der Verkehrsart "Halbduplex" im Dialog über einen Übertragungskanal wird ständig zwischen Empfangszustand und Sendezustand der Datenstationen und damit der Schlüsselgeräte geschaltet. Dabei werden die entsprechenden Sende- oder Empfangs-Kryptogeneratoren miteinander gekoppelt. Versuchen beide Datenstationen gleichzeitig zu senden, befinden sich die Schlüsselgeräte der Datenstationen gleichzeitig im Sendezustand und die Empfangs-Kryptogeneratoren der Schlüsselgeräte sind abgekoppelt. Dies kann bis zur endgültigen Aufnahme der Kommunikation zu einem Schlüsselphasenverlust in den Kryptogeneratoren führen, d.h. zu einem ungleichen Phasenstand von Empfangs-Kryptogenerator und Sende-Kryptogenerator der kommunizierenden Datenstationen. Während dieses Zeitabschnittes können auch Nachrichten verloren gehen.

Um den Sende-Kryptogenerator und den Empfangs-Kryptogenerator der Schlüsselgeräte der Datenstationen erneut in Phase zu bringen, ist eine aufwendige und zeitraubende Einphaseprozedur notwendig. Während dieser Einphaseprozedur ist der Nachrichtenaustausch unterbrochen.

Aufgabe der Erfindung ist es deshalb, für im Halbduplex-Betrieb arbeitende Datenübertragungsnetze eine Anordnung zur Vermeidung von Schlüsselphasenverlust bereitzustellen, die einfach aufgebaut ist und funktionssicher arbeitet.

Diese Aufgabe wird bei einer Anordnung der eingangs genannten Art gemäß den Merkmalen des Patentanspruches 1 gelöst.

Vorteilhafte Ausführungsformen der Erfindung sind in den Unteransprüchen gekennzeichnet.

Durch eine dem Schlüsselgerät einer Datenstation zugeordnete Schaltungsanordnung wird sichergestellt, daß ein Verschlüsselungsvorgang im Sendekanal einer Sendestation gleichzahlige Entschlüsselungsvorgänge im Empfangskanal der gleichen Station bewirken. Dies gilt umgekehrt auch für Entschlüsselungsvorgänge im Empfangskanal. Dabei werden vom Empfangskanal gesteuert, ergänzende Verschlüsselungsschritte im Sendekanal durchgeführt. Dies erfordert eine eindeutige Zustandsbestimmung durch eine Sende-Empfangszustandssteuerung, die den Zustand der Schlüsselgeräte alternativ steuert.

Die Schaltungsanordnung ist Bestandteil einer Sende-Empfangssteuerung der Schlüsselgeräte. Sie detektiert den Sende- bzw. Empfangszustand der kommunizierenden Datenstationen und verhindert, daß gleichzeitig gesendet und empfangen wird.

Durch die erfindungsgemäße Schaltungsanordnung werden im Halbduplex-Betrieb in Datennetzen zusätzliche zeitraubende Einphaseprozeduren durch Schlüsselphasenverlust vermieden.

Die erfindungsgemäße Anordnung wird im folgenden anhand eines Fernschreibnetzes, das im Fünfer- oder Achtercode arbeitet, beschrieben. Es ist jedoch auch für andere Datennetze mit anderen Datenendgeräten, wie z.B. Datenterminals anwendbar, die in der Verkehrsart "Halbduplex" arbeiten.

Durch die erfindungsgemäße Schaltungsanordnung ist es möglich, Schlüsselgeräte, die für Datennetze im Duplexbetrieb ausgelegt sind, in Datennetzen mit Halbduplex-Betrieb zu verwenden.

Eine Ausführungsform der Erfindung ist in der Zeichnung dargestellt und wird im folgenden beispielsweise näher beschrieben.

Die Figur zeigt ein schematisches Blockschaltbild einer Anordnung zur Vermeidung von Schlüsselphasenverlust in einem Fernschreibnetz.

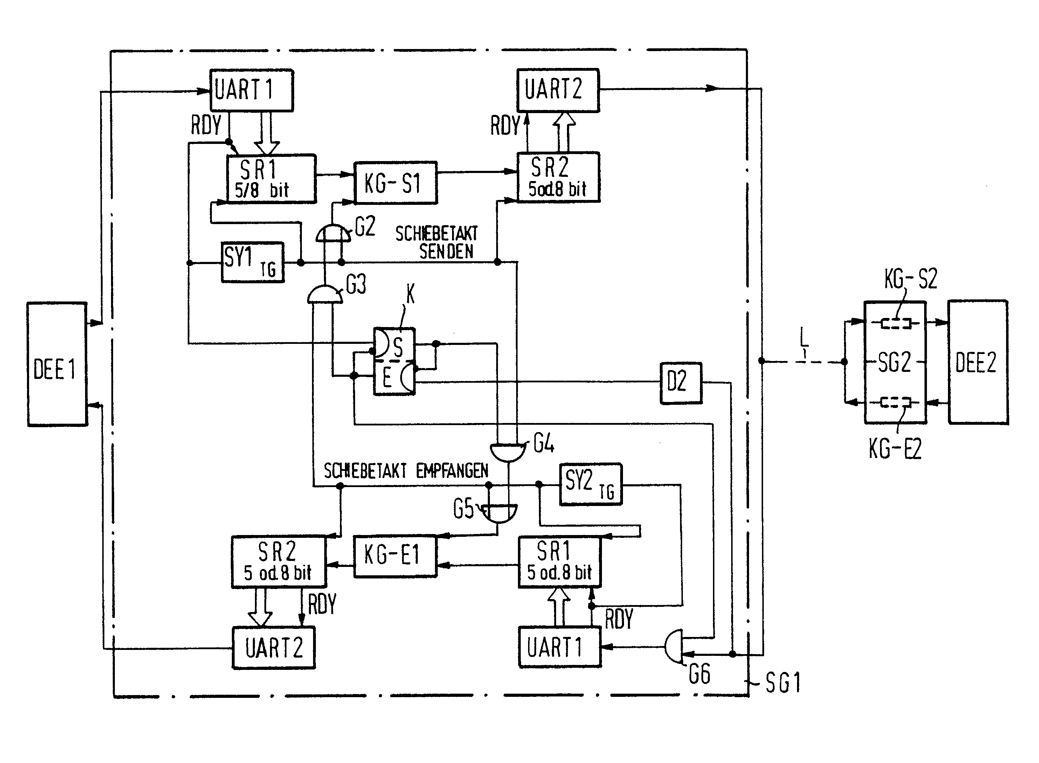

Ein in der Figur 1 dargestelltes gesichertes Fernschreibnetz enthält eine Vielzahl von Datenstationen DEE1, DEE2 mit Fernschreibgeräten, wobei in der Zeichnung der Einfachheit halber nur zwei Datenstationen dargestellt sind, welche für einen Zeitraum oder standleitungsmäßig miteinander verbunden sind. Jeder Datenstation DEE1 und DEE2 ist ein Schlüsselgerät SG1, SG2 zugeordnet mit einem Sende-Kryptogenerator KG-S1, KG-S2 in einem Sendekanal und einem Empfangs-Kryptogenerator KG-E1, KG-E2 in einem Empfangskanal. Die Schlüsselgeräte SG1 und SG2 sind untereinander identisch aufgebaut. Der Nachrichtenaustausch wird in der Verkehrsart "Halbduplex" durchgeführt, d.h. die zwischen den Datenstationen DE1 und DE2 befindliche Übertragungsstrecke in Form z.B. einer Leitung L wird wechselweise genutzt. Übertragen werden über die Leitungen in üblicher Weise Fernschreibzeichen in fünfer oder achter Code mit einem vorausgehenden Startschritt und einem nachfolgenden Stoppschritt und mit fünf bzw. acht Informationsbits.

Sowohl dem Sende-Kryptogenerator KG-S1 als auch dem Empfangs-Kryptogenerator KG-E1 sind eingangs- und ausgangsseitig Umsetzschaltungen zugeordnet mit handelsüblichen Empfangs- und Sendebausteinen UART (Universal-Asynchronous-Receiver-Transmitter) mit zugehörigen Schieberegistern SR1 und SR2. Bei den Schieberegistern handelt es sich um übliche Schieberegister in Form von Zwischenspeichern, die die vom UART1 gelieferten Informationsbits (fünf oder acht) der Fernschreibzeichen zwischenspeichern und sie den Kryptogeneratoren zum Verschlüsseln bzw. Entschlüsseln zuführen bzw. die entschlüsselten bzw. verschlüsselten Informationsbits zwischenspeichern und zur Übernahme und Übertragung durch den ausgangsseitigen UART2 über die Leitung L bereitstellen. Zum getakteten Zuführen der Informationsbits zu den Kryptogeneratoren und zur Aufnahme der verschlüsselten bzw. entschlüsselten Informationsbits nach dem Durchlauf durch die Kryptogeneratoren sind Taktgeneratoren SY1 und SY2 vorgesehen, die auch als ein einziger Taktgenerator ausgebildet sein können. Die Taktgeneratoren des Sende- und des Empfangskanales sind dabei sowohl mit den zugehörigen Schieberegistern SR1, SR2 und den entsprechenden Empfangs- bzw. Sende-Kryptogeneratoren KG-S1, KG-E1 gekoppelt als auch über logische Schaltmittel G2 bis G5 mit den jeweiligen Kryptogeneratoren des anderen Kanales. Sie repräsentieren unter anderem erste Schaltmittel, die in einem Sendezustand des Schlüsselgerätes SG1 bei einem Verschlüsselungsvorgang im Sendekanal den Empfangs-Kryptogenerator KG-E1 des Schlüsselgerätes SG1 phasengleich zum Sende-Kryptogenerator KG-S1 steuern und zweite Schaltmittel, die im Empfangszustand des Schlüsselgerätes SG1 bei einem Entschlüsselungsvorgang im Empfangskanal den Sende-Kryptogenerator KG-S1 des Schlüsselgerätes SG1 phasengleich zum Empfangs-Kryptogenerator KG-E1 steuern.

Weiterhin weist die Schaltungsanordnung eine Sende-Empfangszustandssteuerung zur alternativen Zustandssteuerung der Schlüsselgeräte SG1, SG2 auf. Diese enthält einen Startschrittdetektor D, z.B. in Form eines Diskriminators zur Feststellung des Startschrittes eines von der Leitung L empfangenen Fernschreibzeichens. Sie empfängt außerdem die von dem UART1 gelieferte Fertigmeldung "Ready" RDY. Der Sende- bzw. Empfangszustand wird gegenseitig verriegelt in einer Kippschaltung K festgehalten. Alle diese Schaltmittel können Elemente eines Softwareprogrammes einer mikroprozessorgesteuerten Schaltungsanordnung sein. Die Schaltmittel repräsentieren dabei eine schematische hardwaremäßige Lösung. Die Schaltmittel können außerdem auch in Bausteinen integriert sein. Z.B. kann der Startschrittdetektor D Bestandteil der UART sein.

Die Funktion der Schaltungsanordnung wird nun im folgenden näher erläutert.

Sendezustand

In einem Ausgangszustand bei aufgebauter Verbindungsstrecke zwischen den Datenstationen DEE1 und DEE2 beabsichtigt die Datenstation DEE1 eine Nachricht zu senden. Das von der DEE1 seriell einlaufende Fernschreibzeichen wird vom UART1 empfangen und in der Mitte des Stoppschrittes durch die Meldung "Ready" zur parallelen Weiterverarbeitung angemeldet. Dabei wird über das Kippglied K (symbolisch durch Gatter dargestellt) geprüft, ob der Sendebetrieb aufgenommen werden kann oder ob sich das Schlüsselgerät SG1 gerade im Empfangszustand befindet, d.h. in einem Zustand, in dem die Gegenstation DEE2 sendet. Es gibt dabei im Dialogverkehr keine Priorität hinsichtlich Senden und Empfangen, so daß nur alternativ gesendet bzw. empfangen werden kann. Bei dem angenommenen Ausgangszustand wird davon ausgegangen, daß die Gegenstation DEE2 gerade nicht sendet. Die Meldung "Ready" RDY setzt die Kippstufe K auf Sendezustand S. Die Kippstufe K ist dabei so aufgebaut, daß sie den geschalteten Zustand (Sendezustand S) bis Ende des ersten Stoppschrittes des Fernschreibzeichens hält und dann wieder in ihre ursprüngliche Lage zurückkehrt, wenn zwischenzeitlich kein neues Fernschreibzeichen von der DEE1 einläuft.

Beginnend mit einem Readysignal RDY, verknüpft mit dem Sendezustand S wird der Inhalt des UART1 in das Schieberegister SR1 übernommen, der Taktgenerator SY1 aktiviert und die Informationsbits des Fernschreibzeichens aus dem Schieberegister SR1 in den Sende-Kryptogenerator KG-S1 mit einem Vielfachen der eingestellten Übertragungsschrittgeschwindigkeit (z.B. 64 kbit/s) eingeschoben, dort verschlüsselt und dann in das ausgangsseitige Register SR2 eingeschoben. Sowohl Sende-Kryptogenerator KG-S1 als auch das Schieberegister SR2 werden vom Taktgenerator SY1 getaktet. Befinden sich die verschlüsselnden Informationsbits des Fernschreibzeichens vollständig im Schieberegister SR2, übernimmt der ausgangsseitige UART2 mit dem Readysignal RDY diese Informationsbits, ergänzt sie durch Start- und Stoppschritt und sendet sie über die Leitung L zur Datenstation DEE2. In dem Schlüsselgerät SG2 der Datenstation DEE2 werden in entsprechender Weise die Informationsbits des Fernschreibzeichens entschlüsselt und dann der Datenstation DEE2 zugeführt. Damit bei abgetrenntem Empfangs-Kryptogenerator KG-E1 der Empfangs-Kryptogenerator KG-E1 ebenfalls in Phase mit dem Sende-Kryptogenerator KG-S1 bleibt, wird der Takt SY1 über die Gatter G4 und G5 dem Empfangs-Kryptogenerator KG-E1 zugeführt. Diese Taktzufuhr wird über das UND-Glied G4 bei einem Wechsel der Kippstufe K vom Sendezustand auf Empfangszustand unterbrochen.

Der Verschlüsselungsvorgang selbst wird mit einer Taktrate von größer 48Kbit/s durchgeführt. Damit entsteht zwischen dem Einschaltzeitpunkt der Sendelage und der zur Leitungsseite ausgegebenen Startschrittpolarität eine vernachlässigbare Zeitverzögerung.

Nach Übertragung des Fernschreibzeichens mit Ende des ersten Stoppschrittes wird die Kippstufe K in ihre Ausgangslage zurückgesetzt. Das Fernschreibzeichen wird von dem Schlüsselgerät SG2 empfangen, durch den Startschrittdetektor D der Empfangszustand eingestellt und mit Ende des ersten Stoppschrittes die Kippstufe des Empfangs-Kryptogenerators KG-E2 der Datenstation DEE2 in ihre Ausgangslage zurückgesetzt.

Empfangszustand

Ein von der Datenstation DEE2 gesendetes Fernschreibzeichen wird nach Empfang durch das Schlüsselgerät SG1 in entsprechender Weise verarbeitet. Dabei detektiert der Startschrittdetektor D des Schlüsselgerätes SG1 den Startschritt und setzt über die Kippstufe K das Schlüsselgerät SG1 in den Empfangszustand. Der Baustein UART1 des Empfangskanales übernimmt das Fernschreibzeichen und legt die Informationsbits in dem Register SR1 ab. Der Taktgenerator SY2 des Empfangsgenerators wird über das Readysignal RDY aktiviert und die verschlüsselten Informationsbits SR1 im Takt des Taktgenerators SY2 dem Empfangs-Kryptogenerator KG-E1 zugeführt, entschlüsselt und im ausgangsseitigen Register SR2 abgelegt. Zur Vermeidung von Schlüsselphasenverlust wird der Schiebetakt des Taktgenerators SY2 über die Gatter G2 und G3 dem sendeseitigen Kryptogenerator KG-S1 des Schlüsselgerätes SG1 zugeführt. Damit wird ein synchrones Verhalten der Kryptogeneratoren im Schlüsselgerät erreicht und damit ein synchrones Verhalten der Kryptogeneratoren der Schlüsselgeräte SG1 und SG2.

Der Entschlüsselungsvorgang wird wie im Sendezustand mit einer Taktgeschwindigkeit von mehr als 48 kbit/s durchgeführt.

Befinden sich die entschlüsselten Informationsbits vollständig im Schieberegister SR2, werden sie in den UART2 übernommen, durch Start- und Stoppschritt ergänzt und dem Fernschreibgerät (Datenstation) DEE1 mit der Übertragungs-Schrittgeschwindigkeit zugeführt.

Der Empfangszustand des Schlüsselgerätes SG1 wird solange aufrechterhalten bis die Datenstation DEE2 zu senden aufhört. Danach kann erneut der Sendebetrieb von der Datenstation DEE1 aufgenommen werden.

Bei einer hier nicht dargestellten Ausführungsform. der Sende-Empfangszustandssteuerung zur alternativen Zustandssteuerung der Schlüsselgeräte kann der Kippstufe K eine Zwangsschaltung in Form eines Togglers zugeordnet sein. Ein derartiger Toggler dient als Moderator zur Definition einer Zugriffsoption für die beteiligten Datenstationen. Er liefert z.B. einen beliebig schnellen Takt und definiert damit die Zeitfenster für die Zugriffsoption der Datenstationen DEE1 bzw. DEE2.

Es ist außerdem möglich, über eine derartige Zugriffsoptionsschaltung Prioritäten etwa für den Empfang oder für das Senden festzulegen.

In allen Fällen wird durch die Sende-Empfangszustandssteuerung verhindert, daß beide Zustände, nämlich Empfangszustand und Sendezustand, gleichzeitig auftreten können.

Durch die gegenseitige Abhängigkeit der Sende-Empfangssteuerungen der Stationen SG1 und SG2 wird eine zeichengenaue Synchronisation der Schlüsselgeräte erzwungen. Sendeanforderungen, die von der DEE's im Konfliktfall quasi gleichzeitig, d.h. innerhalb einer Zeichenumlaufzeit eintreffen können, führen in der Regel dazu, daß sich die zeitlich frühere durchsetzt. In Sonderfällen können beide Stationen die Sendelage einnehmen, was zum Nachrichtenverlust nicht aber zum Schlüssenphasenverlust führt. Die Phasenlage der Kryptogeneratoren wird durch deren Verkoppelung nicht gestört.

**Patentansprüche**

1. Anordnung zum verschlüsselten Nachrichtenaustausch im Halbduplex-Betrieb zwischen mehreren Datenstationen (DEE1, DEE2) über eine Übertragungsstrecke, wobei jeder Datenstation (DEE1, DEE2) ein Schlüsselgerät (SG1, SG2) mit einem Sende-Kryptogenerator (KG-S1, KG-S2) in einem Sendekanal und einem Empfangs-Kryptogenerator (KG-E1, KG-E2) in einem Empfangskanal zugeordnet ist und Sende- und Empfangskanal als gemeinsamer Übertragungskanal über die Übertragungsstrecke geführt sind mit
   - einer dem Schlüsselgerät (SG1, SG2) einer Datenstation (DEE1, DEE2) zugeordneten Schaltungsanordnung, um eine Phasengleichheit des Sende-Kryptogenerators (KG-S1), der sendenden Datenstation (DEE1) mit dem Empfangs-Kryptogenerator (KG-E2) der empfangenen Datenstation (DEE2) sicherzustellen, wobei die Schaltungsanordnung aufweist
   - erste Schaltmittel, die in einem Sendezustand (S) eines Schlüsselgerätes (SG1, SG2) bei einem Verschlüsselungsvorgang im Sendekanal den Empfangs-Kryptogenerator (KG-E1, KG-E2) des Schlüsselgerätes (SG1, SG2) phasengleich zum Sende-Kryptogenerator (KG-S1, KG-S2) desselben Schlüsselgerätes steuern,
   - zweite Schaltmittel, die im Empfangszustand (E) eines Schlüsselgerätes (DEE1, DEE2) bei einem Entschlüsselungsvorgang im Empfangskanal den Sende-Kryptogenerator (KG-S1, KG-S2) des Schlüsselgerätes (DEE1, DEE2) phasengleich zum Empfangs-Kryptogenerator (KG-E1, KG-E2) desselben Schlüsselgerätes steuern und

- eine Sende-Empfangszustandssteuerung zur alternativen Zustandssteuerung der Schlüsselgeräte (SG1, SG2).

2. Anordnung nach Anspruch 1 mit einem mit den Sende- und Empfangs-Kryptogeneratoren (KG-S1, KG-E1; KG-S2, KG-E2) einer Datenstation koppelbaren Taktgenerator (SY1, SY2), der im Sende- bzw. Empfangszustand der Datenstation die Kryptogeneratoren (KG-S1, KG-E1; KG-S2, KG-E2) derselben Datenstation gemeinsam taktet.

3. Anordnung nach einem der Ansprüche 1 oder 2, wobei die Sende-Empfangszustandssteuerung aufweist: Mittel (K) zur alternativen Einstellung des Sende- oder Empfangszustandes des Schlüsselgerätes (SG1, SG2) in Abhängigkeit von einem Startschritt des empfangenden Zeichens oder der Sendeanforderung durch das Datenendgerät DEE1.

UART1

RDY

SR1
5/8 bit

KG-S1

UART2

RDY

SR2
5 od.8 bit

G2

SCHIEBETAKT
SENDEN

SY1 TG

G3

K

S
E

DEE1

D2

KG-S2

SG2

DEE2

KG-E2

G4

SCHIEBETAKT EMPFANGEN

SY2 TG

G5

SR2
5 od.8 bit

KG-E1

SR1
5 od.8 bit

RDY

RDY

UART2

UART1

G6

SG1

L

EP 0 456 115 A2